Europäisches Patentamt

European Patent Office

Office européen des brevets

(11) Publication number: **0 140 295**
**B1**

(12) **EUROPEAN PATENT SPECIFICATION**

(45) Date of publication of patent specification: **03.05.89**

(21) Application number: **84112572.7**

(22) Date of filing: **18.10.84**

(51) Int. Cl.⁴: **G 01 N 27/56**

(54) **Method of operating an air-fuel ratio sensor.**

(30) Priority: **19.10.83 JP 194136/83**

(43) Date of publication of application:
**08.05.85 Bulletin 85/19**

(45) Publication of the grant of the patent:
**03.05.89 Bulletin 89/18**

(84) Designated Contracting States:
**DE FR GB**

(56) References cited:
**EP-A-0 020 938
EP-A-0 035 177
EP-A-0 052 542
DE-A-3 028 274
FR-A-2 334 101
GB-A-2 050 625
US-A-4 272 330**

(73) Proprietor: **HITACHI, LTD.**
**6, Kanda Surugadai 4-chome Chiyoda-ku
Tokyo (JP)**

(72) Inventor: **Miki, Masayuki**
**38-480, Yakushidai-Apartment House
5, Kosunacho-1-chome Katsuta-shi (JP)**
Inventor: **Suzuki, Seikoh**
**3705, Kanaicho
Hitachiota-shi (JP)**
Inventor: **Sasayama, Takao**
**7-14-11, Kanesawacho
Hitachi-shi (JP)**
Inventor: **Suzuki, Toshitaka**
**28-32, Ishinazakacho-1-chome
Hitachi-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

**Description**

The present invention relates to a method for operating an air/fuel ratio sensor which may be installed in exhaust gas emitted by an internal combustion engine to detect from the exhaust gas composition that the air/fuel ratio in said engine has become a stoichiometric air/fuel ratio according to the prior art portion of claim 1 (see US—A—4 272 330).

In order to detect that the air-fuel ratio in the automobile engine has become equal to the stoichiometric air-fuel ratio (with the excess air factor λ=1) on the basis of the composition of exhaust emission, there have been used conventionally an oxygen sensor incorporating a pair of platinum electrodes having catalytic action and a solid electrolyte of zirconia. This type of oxygen sensor is arranged to have one platinum electrode exposed to the exhaust emission and another electrode to the atmosphere, and the state of λ=1 is detected by the "atmospheric reference method", in which an electromotive force is produced in response to the difference between the oxygen partial pressure in the exhaust gas and that of the atmosphere. However, this oxygen sensor on the basis of the atmospheric reference method is complex and bulky in structure, and hence it is costly.

To cope with these problems there has been proposed an oxygen sensor, wherein the sensor is totally exposed to the exhaust emission, with one electrode made of noncatalytic gold and another electrode of platinum. However, the gold electrode is not durable (reliable) enough to withstand a severe operating environment of the oxygen sensor, and the realization of this sensor is unpracticable.

Another oxygen sensor proposed is that wherein the sensor is totally exposed to the exhaust gas with one platinum electrode being exposed to the exhaust gas, while the reference oxygen concentration is created at another platinum electrode by utilization of the oxygen pumping phenomenon. The oxygen pumping is referred to as the conveyance of oxygen from a positive electrode to a negative electrode, both attached to a solid electrolyte, through the conduction of a current for moving oxygen ions from the negative to positive electrodes across the solid electrolyte.

Japanese Patent Application Laid-open Publication No. 69690/77 discloses the oxygen sensor utilizing the oxygen pumping phenomenon, wherein the sensor comprises a solid electrolyte of zirconia and a reference oxygen room formed in the electrolyte, with the provision of a diffusion hole for diffusing oxygen into the room. The sensor is designed to operate to evacuate oxygen from the reference oxygen room by the oxygen pumping phenomenon and the oxygen concentration in the sensor environment is measured from the amount of oxygen introduced through the diffusion hole in response to the reduction of oxygen in the reference oxygen room. Japanese Patent Laid-open Publication No. 69690/77, discloses nothing about the concept of detecting the state of λ=1.

Japanese Patent Laid-open Publication No. 30681/80 discloses an oxygen sensor comprising two solid electrolytic cells of zirconia laminated together with a reference oxygen room and an evacuation hole for evacuating oxygen from the room being formed between the cells, wherein the oxygen concentration in the reference oxygen room is controlled constantly and the environmental oxygen concentration is measured with respect to the reference. This sensor is for merely measuring the oxygen concentration in the atmosphere, and the publication describes nothing about the concept of detecting the state of λ=1.

Japanese Patent Laid-open Publication No. 111441/82 discloses an oxygen sensor having two cells, one use for oxygen pumping and the other for detecting the oxygen concentration in the atmosphere at the transitional point of a generated electromotive force. The device is designed to make variable the transitional point of electromotive force, and is not directed to detection of the state of λ=1. In addition, this sensor has a complex laminated structure as in the case of Japanese Patent Laid-open Publication No. 30681/80.

Japanese Patent Laid-open Publication No. 154450/80 discloses an oxygen sensor using two solid electrolytic cells of zirconia, one used for controlling oxygen pumping and the other for measurement. This sensor is designed to control, by introduction or evacuation, the oxygen partial pressure at a reference electrode located at the center of the laminated cells through the application of a voltage or current to the pump cell, so that the λ is measured from the electromotive force of the detection cell. This method cannot avoid a complex structure due to the laminated cells, and the hermetic structure for the reference electrode conceivably causes the peeling of electrode or breakage of element due to a rising pressure when oxygen is introduced. Moreover, the porous electrode pressed between the layers will have a decreased surface area of gaseous domain where the electrode is in contact with oxygen molecules, resulting in a fallen catalytic activity, and a transitional output characteristic will hardly be attained. In addition, the solid electrolyte of zirconia used for the pump cell needs to be a porous sintered material, and its difficulty in controlling the manufacturing process suggests rather inferior productivity.

Japanese Patent Laid-open Publication Nos. 16419/79 and 156856/80 disclose oxygen sensors using a single cell working for both oxygen pumping and detection. In these sensors, a cell is placed on a substrate with a voltage or current applied to the cell so as to control the oxygen partial pressure in the vicinity of the electrode on the side in contact with the substrate, and the state of λ=1 is detected from the electromotive force of the cell. This method also employs a hermetic structure for the electrode interface, posing possibly problems of peeling electrode, broken element and falling catalytic activity as in the case of Japanese Patent Laid-open Publication No. 154450/80.

US—A—4,272,330 discloses an oxygen sensor for determining the partial pressure of oxygen in a gaseous atmosphere which comprises two solid electrolyte layers each of which is made of zirconia and has formed electrodes on its side to flow electric current therethrough and further comprises a diffusion room which is located between the solid electrolyte layers and is connected to the outer atmosphere through a gas diffusion hole. In operation of the sensor oxygen from the diffusion room is pumped into the outer atmosphere through one of the solid electrolyte layers by means of applying an electric voltage across it and the oxygen concentration inside the diffusion room which is deemed to be equal to that of the outer atmosphere is measured from electromotive forces created at the outer one of the solid electrolyte layers.

EP—A—0 035 177 and GB—A—2,050,625 also disclose oxygen sensors employing solid electrolyte layers which are provided with electrodes for flowing electrical current therethrough for oxygen transfer. These sensors are similar in structure with each other insofar as they do not comprise any diffusion room including oxygen to be measured. Rather, oxygen transfer and oxygen concentration measurement are performed between different sets of electrodes.

An object of the present invention is to provide a reliable method for oxygen detection particularly adapted for use in controlling an internal combustion engine and employing a simple sensor structure which is totally exposed to the exhaust gas and is provided with a diffusion room in which the oxygen concentration is controlled by utilization of the oxygen pumping phenomenon, wherein the air/fuel ratio of the engine becoming the stoichiometric air/fuel ratio is detected from the generated electromotive force.

The solution of this problem according to the invention is defined in the appended Claim 1. Embodiments are defined in the dependent claims.

In performing the method according to this invention the oxygen concentration in a diffuser provided within the sensor is controlled so that it is used as a reference of measurement and the fact that the air/fuel ratio has become equal to the stoichiometric air/fuel ratio is detected from the electromotive force generated in response to the difference between the oxygen concentration in the exhaust emission and in the diffuser.

The air/fuel ratio sensor operated according to the present invention comprises a solid state electrolytic layer of zirconia, a pair of electrodes formed on both sides of the electrolytic layer, a cover provided over the electrolytic layer to enclose one of the electrodes with a diffusion room being formed between the electrolytic layer, and a gas diffusion hole for communicating the diffusion room with the outside of the sensor. A current is conducted between the positive electrode inside the diffusion room and the negative electrode provided outside so as to control the oxygen concentration in the diffusion room, and the fact that the air-fuel ratio has become the stoichiometric air-fuel ratio is detected from the voltage between both electrodes produced in response to the difference between the oxygen concentration at the electrode in the diffusion room and that at another electrode exposed to the exhaust gas. The result of detection is used to control the air-fuel ratio of the automobile engine.

In this invention, the air-fuel sensor has a diffusion room provided around one of electrodes, which one is exposed to oxygen of reference concentration having a large surface area of gaseous domain so as to prevent its catalytic activity from falling, and a gas diffusion hole for preventing the peeling of electrode or the destruction of element that would otherwise occur due to a rising pressure in the diffusion room. The air-fuel sensor according to this invention can be fabricated by the thick-film process, that realizes miniaturization and cost reduction for the air-fuel sensor.

The air-fuel sensor of the type having a diffusion room and setting up the reference oxygen concentration in the diffusion room utilizing the oxygen pumping phenomenon introduces oxygen from the outside of the sensor, resulting in a slightly lower oxygen concentration at the exterior electrode than the oxygen concentration of the exhaust gas. This causes the sensor to respond to the oxygen concentration of the exhaust gas slightly higher than the point of stoichiometric air-fuel ratio, and in order to minimize this error, the current contributing to the oxygen pumping phenomenon needs to be reduced. The sensor provides on its electrode terminals an electromotive force arising in response to the difference between the oxygen concentration inside the diffusion room and outside the sensor, and this terminal voltage includes a voltage drop which is the product of the oxygen pumping current by the impedance of the zirconia electrolytic layer. The impedance of the zirconia electrolyte varies depending on the temperature, and the oxygen pumping current needs to be reduced also for minimizing the effect of the impedance variation on the electrode terminal voltage. On the other hand, carbon monoxide in the exhaust gas diffuses into the diffusion room through the diffusion hole, causing the carbon monoxide to react with oxygen to produce carbon dioxide, that is a reversible reaction, and when the exhaust gas is rich, the quantity of oxygen contributing to the above reaction increases, resulting in a fall in the oxygen concentration in the diffusion room if less amount of oxygen is introduced by oxygen pumping, thus, in a less difference of oxygen concentration from that outside the sensor, that eventually results in a decreased sensor output. On this account, the oxygen pumping current needs to be set appropriately. The magnitude of current depends on the sectional area of the diffusion hole which prevents the deterioration or breakage of the device by the rising pressure in the diffusion room due to the introduction of oxygen. The inventors of this invention have confirmed through the experiment that by the provision of a diffusion hole with a sectional area about 1/100 or less the electrode area, the above-mentioned error in detecting the stoichiometric air-fuel ratio can be reduced, the effect of voltage drop across the zirconia layer can be minimized, and a fall in the electromotive force in a rich domain can be reduced, thereby providing practically satisfactory sensor characteristics. The pressure rise in the diffusion room was found fairly sustainable.

These and other objects and advantages of the present invention will become more apparent from the following description and drawings, in which:

Fig. 1 is an illustration showing the basic structure of an air/fuel ratio sensor to be operated according to this invention for controlling an internal combustion engine;

Fig. 2 is a graph showing the current dependency of the output characteristics of the air-fuel ratio sensor;

Fig. 3 is a graph showing the temperature dependency of the output characteristics of the air-fuel ratio sensor;

Fig. 4 is a graph showing the effect of the magnitude of the constant current on the output of the air-fuel ratio sensor;

Fig. 5 is a graph showing the experimental results of the prototype sensor;

Figs. 6a and 6b are diagrams showing the shape of the gas diffusion hole provided in the prototype sensor;

Fig. 7 is a diagram used to explain the fabricating process for the air-fuel ratio sensor;

Fig. 8 is a graph showing the static characteristics of the prototype sensor;

Fig. 9 is a graph showing the dynamic characteristics of the prototype sensor;

Fig. 10 is an illustration showing the principle of a practically used air/fuel ratio sensor incorporating a heater; and

Fig. 11 is a graph used to explain the effect of the size of the gas diffusion hole.

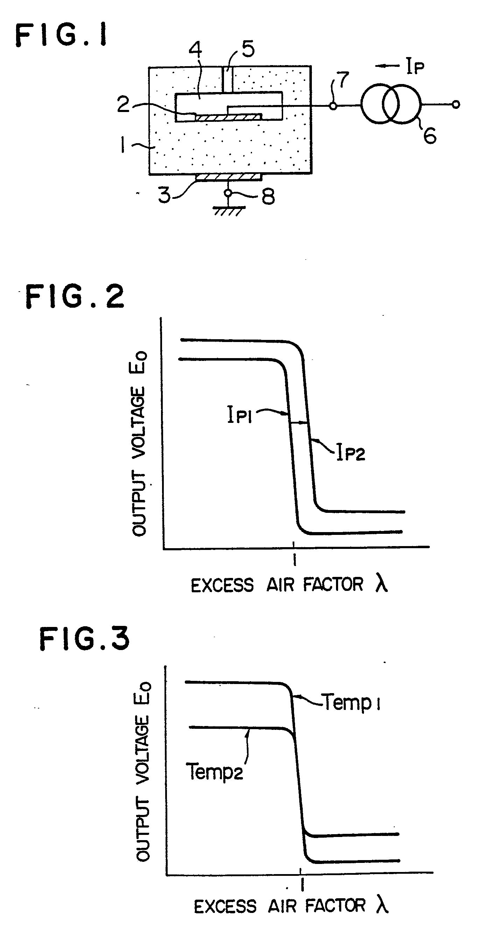

The principle arrangement of a air/fuel ratio sensor operated according to this invention is shown in Fig. 1. The arrangement includes a solid electrolyte 1 of zirconia ($ZrO_2$), a platinum electrode 2 working as a positive electrode of the sensor, a platinum electrode 3 working as a negative electrode of the sensor, a diffusion room 4, a gas diffusion hole 5, a constant current source 6, and terminals 7 and 8 connected to the electrodes 2 and 3, respectively.

In the arrangement of Fig. 1, the voltage e between the terminals 7 and 8 is expressed as a function of the electromotive force E generated between the electrodes by the difference of oxygen partial pressure at both electrodes, the resistance r of the solid zirconia electrolyte, and the current Ip flowing from the current source 6 through the sensor, as follows.

$$e = E + r \, Ip \qquad (1)$$

The electromotive force E is expressed by the Nernst's equation in terms of the oxygen partial pressure $P_1$ at the three-phase interface of the negative electrode, i.e., a surface where the electrode, exhaust gas and zirconia are in contact with one another, the oxygen partial pressure $P_2$ in the diffusion room 4, as follows.

$$E = \frac{RT}{4F} \cdot \ln \frac{P_2}{P_1} \qquad (2)$$

where F is the Faraday constant, T is the absolute temperature, and R is the gas constant.

The air-fuel ratio sensor according to this invention, which is totally exposed to the exhaust gas, provides an equal value for the $P_1$ and $P_2$ unless oxygen pumping takes place and, therefore, the electromotive force E is zero. On this account, the constant current source 6 is used to control the oxygen concentration in the diffusion room 4. When a constant current $I_p$ is conducted from the positive platinum electrode 2 to the negative platinum electrode 3, oxygen at the three-phase interface of the negative platinum electrode 3 and zirconia electrolyte 1 is ionized and attracted by the positive electrode, where ionized oxygen is oxidized by the platinum electrode 2 and restored to oxygen molecules. Namely, oxygen molecules at the negative electrode interface are injected into the diffusion room by the current excitation. The amount of oxygen molecules injected is determined by the value of the constant current Ip. The value of the current Ip does not always need to be constant.

Due to the presence of oxygen and carbon monoxide flowing through the gas diffusion hole 5 into the diffusion room 4, the following well known reaction takes place in the diffusion room 4 as in the case of the reaction on the negative electrode.

$$CO + \tfrac{1}{2}O_2 \leftrightarrows CO_2 \qquad (3)$$

In the exhaust gas of the automobile engine, carbon monoxide is more in quantity than oxygen in a rich region where the excess air factor λ is smaller than 1, and carbon monoxide is less than oxygen in a lean region where λ is larger than or equal to 1.

Accordingly, in the rich region, oxygen is consumed by the reaction shown by Equation (3), and the diffusion room 4 needs to be supplied with much oxygen from the negative electrode through the conduction of the constant current Ip. Consequently, the positive electrode becomes to have a high oxygen concentration, while the negative electrode interface approaches a state of oxygen deficiency due to the catalytic action of the platinum electrode, resulting in a higher electromotive force E. Conversely, in the lean region, oxygen is excessive and carbon monoxide is deficient at the negative electrode, resulting in a less difference of oxygen concentration in the diffusion room 4 and on the negative electrode interface, and the electromotive force given by Equation (1) is substantially zero. As a result, the state of $\lambda=1$ can be detected by injection oxygen from the negative electrode to the diffusion room 4.

Fig. 2 shows the output characteristics of the air-fuel ratio sensor according to this invention. As mentioned previously, the amount of oxygen injected into the diffusion room 4 is proportional to the value of the constant current Ip. Accordingly, an increased Ip causes the oxygen deficiency at the three-phase interface of the negative electrode to occur on the lean side, and the stepwise transition of electromotive force occurs not exactly at the excess air factor of $\lambda=1$, but at a point shifted toward the lean region side. Therefore, it is necessary to choose the best value of Ip for preventing the shift of the transition point.

Fig. 3 shows an example of the thermal characteristics of the inventive air-fuel ratio sensor. On the graph, temperature Temp 1 is lower than Temp 2, and the reason why the output voltage is higher at the lower temperature Temp 1 is that the zirconia electrolyte has increasing impedance as the temperature falls, and thus the voltage drop also increases by the influence of the current Ip and the ohmic loss excessive voltage. To prevent the increased voltage drop, the current Ip must be made small.

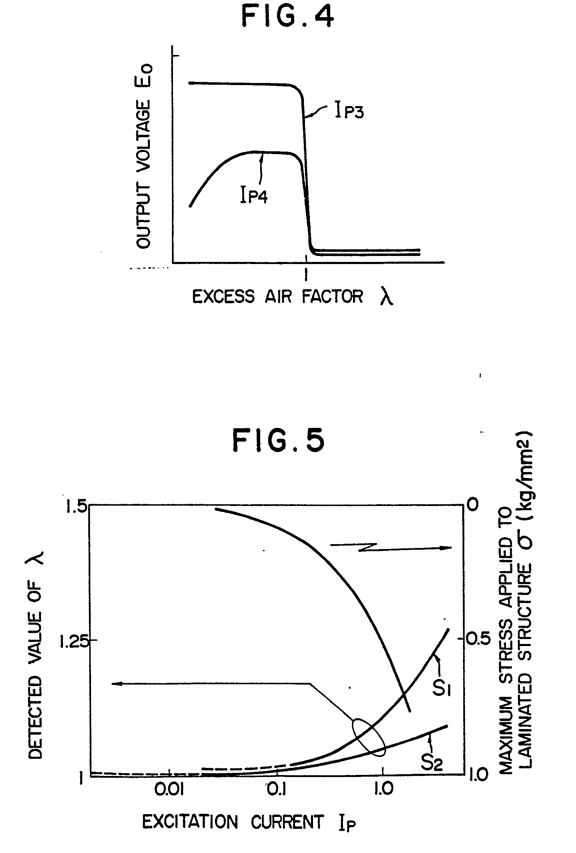

Fig. 4 shows the sensor output characteristics resulting from different values of the constant current Ip. On the graph, current $Ip_3$ is larger than $Ip_4$. The constant current $Ip_3$ gives satisfactory output characteristics throughout the excess air factor $\lambda$, while the constant current $Ip_4$ provides the lower output voltage as the value of $\lambda$ decreases. The reason of this phenomenon is that the amount of carbon monoxide in the exhaust gas increases in a rich region, that results in more carbon monoxide diffusing into the diffusion room, and a lack of injected oxygen necessary for the reaction of Equation (3) causes the oxygen concentrations at the positive electrode and negative electrode three-phase interfaces to become close, thus resulting in a falling electromotive force.

As described above, the air-fuel ratio sensor has a problem of output transient shift toward the lean side with respect to the point of $\lambda=1$ and a problem of output reduction with the increase in the amount of diffusing carbon monoxide in a rich region, all largely depending on the value of the constant current and the size of the gas diffusion hole. The oxygen concentration is controlled by injecting oxygen from the negative electrode into the diffusion room, and the shape of gas diffusion hole relates to the problem of deterioration and destruction of the device due to a rising pressure in the diffusion room.

In view of these matters, the inventors of this invention have fabricated experimental air-fuel ratio sensors $S_1$ and $S_2$ with different diameters of gas diffusion hole and confirmed the above-mentioned facts. Fig. 5 shows the result of the experiment. The shift of the detected value of $\lambda$ caused by the excitation current increases progressively as the current increases. The reason is that an increased current causes an increased oxygen injection into the diffusion room, resulting in a state of oxygen deficiency on the negative electrode three-phase interface occurring at a point leaner than $\lambda=1$, and consequently the value of $\lambda$ at which the sensor electromotive force makes a transition is also shifted to the lean side, as explained in connection with Fig. 2. Therefore, in order to minimize the shift of $\lambda$ at the output transition point, the value of constant current Ip must be made as small as possible. Making the Ip small is also favorable to prevent the increase of voltage drop caused by the increased impedance in the lower temperature range as shown in Fig. 3. The fact that Ip can be made small allows the gas diffusion hole to have a smaller diameter, that favors the miniaturization of the air-fuel ratio sensor. However, if the excitation current Ip is made extremely small, the oxygen injection into the diffusion room 4 decreases, resulting disadvantageously in a falling output in a rich region due to the increased diffusion of carbon monoxide, as mentioned in connection with Fig. 4. The dashed line sections on the graph show the characteristics of this region, and the comparison of hole diameters, i.e., 0.12 mm for sensor $S_1$ and 0.03 mm for sensor $S_2$, indicates that the sensor $S_2$ with the smaller diameter of gas diffusion hole can detect the point of $\lambda=1$ more accurately.

The aforementioned problem of deterioration and destruction of the device due to increased pressure in the diffuser, that would result from a smaller diameter of the gas diffusion hole, was examined for the sensor $S_2$, and it was confirmed that the maximum stress σ in the laminated body of the sensor was so small as to be free from that problem.

In conclusion, it was confirmed experimentally that the practically satisfactory sensor characteristics can be attained by setting the sectional area of the gas diffusion hole to about 1/100 or less the area of the negative electrode, although it depends on the length of the hole.

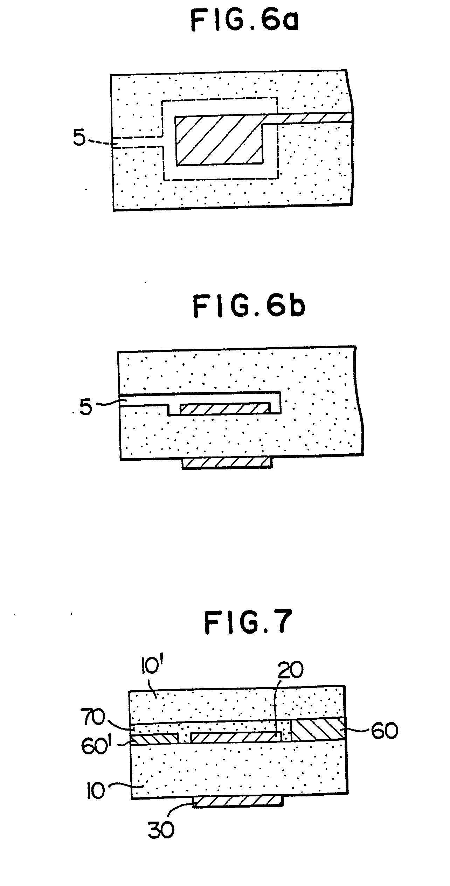

Figs. 6a and 6b are a set of diagrams illustrating shape of the gas diffusion hole formed in the protype sensor, Fig. 6a showing the horizontal cross-section, Fig. 6b showing the longitudinal cross-section. Fig. 7 is a diagram used to explain the fabricating process for the air-fuel ratio sensor according to this invention. The diameter of the gas diffusion hole 5 is so small to be drilled or punched, and therefore it is formed in a lateral groove in the sensor cell as shown in Fig. 6b.

The actual fabricating process for the sensor structure shown in Figs. 6a and 6b will be described briefly with reference to Fig. 7. First, on both sides of a green sheet of zirconia 10, platinum pastes 20 and 30 are printed so that electrodes with a thickness of about 10 µm are formed. Next, a carbon-inclusive organic binder 70 is printed at both ends of the platinum electrode 20, and ceramics 60 and 60' well adherent to the green sheet 10 are printed on the outside of the binder 70. The ceramics 60 and 60' may be of the same material as of the green sheet 10. Organic binder 70 is further printed over the ceramics 60' and platinum paste 20 so as to form diffusion hole and diffusion room. Then, it is overlaid by a green sheet cover member 10', that is heat pressed at about 200°C. In a state of rising temperature following the heat pressing process, the organic binder 70 is burnt, and rooms for the gas diffusion hole and diffusion room are left. Finally, through the baking process at 1500°C, the air-fuel ratio sensor as shown in Figs. 6a and 6b is completed.

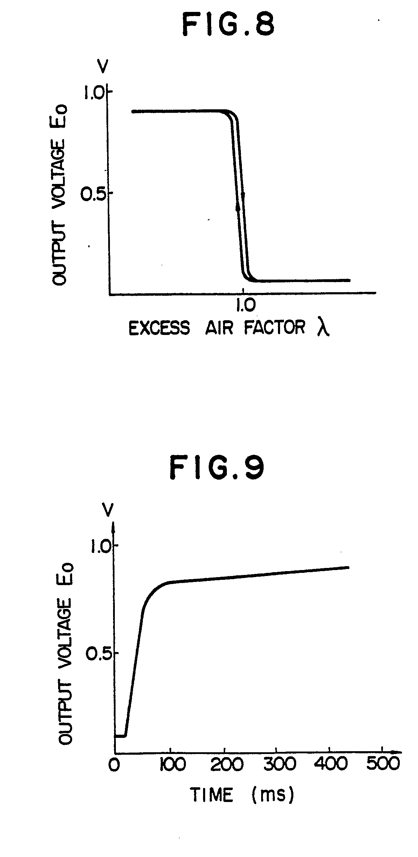

Figs. 8 and 9 show the output characteristics and response characteristics, respectively, of the air-fuel ratio sensor fabricated as illustrated in Figs. 6a and 6b and Fig. 7. The device makes an output transition at the excess air factor of $\lambda = 1$ with little hysteresis. The device is responsive, showing the dynamic characteristics comparable with that of the currently available oxygen sensors.

A shortcoming of air-fuel ratio sensors, including the one according to this invention, utilizing the oxygen pump phenomenon is that they do not operate in the low temperature range. On this account, the sensor needs to be heated up to the operable temperature range above 500°C when it is used.

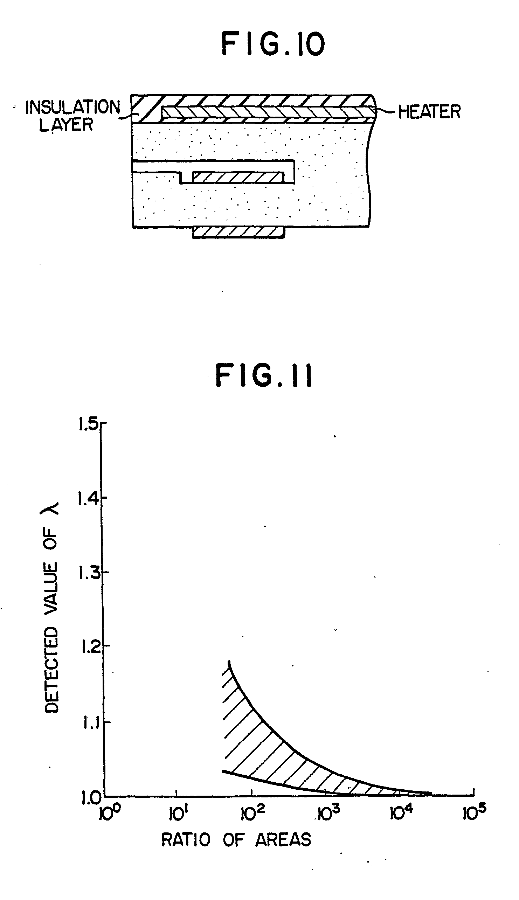

Fig. 10 shows, as an example, the air-fuel ratio sensor incorporating a heater. This heater is fabricated by the thick film process technology, and it is provided on both sides thereof with an insulation layer made of, for example, alumina so as to be insulated from the zirconia layer.

The inventors of this invention have examined the influence of the size of the gas diffusion hole on the detection accuracy of the stoichiometric air-fuel ratio. Fig. 11 shows the result. On the graph, the value of $\lambda$ detected by a test sample which does not spoil the output in a rich region is plotted on the ordinate against the ratio of the electrode area to the sectional area of the gas diffusion hole. Examination was conducted using tens of test samples in different combinations of parametric dimensions, i.e., the area of electrode ranging 3—200 mm, the depth of diffusion room ranging 0.002—3 mm, and the length of gas diffusion hole ranging 0.1—7 mm. It was found that the values of $\lambda$ detected by these samples, i.e., the values of $\lambda$ at the transition of the sensor output, distribute within the hatched area of the graph. There was a trend of characteristics that the shorter the length of the gas diffusion hole, the larger was the amount of shift of detected $\lambda$ toward the lean side. Conceivably, the reason is a large amount of carbon monoxide diffusing into the diffusion room through the short gas diffusion hole. As can be seen from the graph, in order for a test sample to have an offset of $\lambda$ detection within

few percent, the ratio of the electrode area to the sectional area of the diffusion hole must be at least 100.

## Claims

1. A method for operating an air/fuel ratio sensor being installed in exhaust gas emitted by an internal combustion engine to detect from the exhaust gas composition that the air/fuel ratio in said engine has become a stoichiometric air/fuel ratio and comprising a solid electrolyte layer (1) made of zirconia and having formed a first electrode (2) in one of its sides and a second electrode (3) on the other one of its sides, a diffusion room (4) formed adjacent to said first electrode to enclose it and connected with the outside of said sensor through a gas diffusion hole (5) and terminal means (7, 8) for flowing an electric current (Ip) between said first and second electrodes,

characterised by the steps of

a) flowing said electric current (Ip) from said first electrode (2) in said diffusion room (4) as a positive electrode to said second electrode (3) on said other side of said solid electrolyte layer (1) as a negative electrode,

b) determining the areas of said diffusion hole (5) and of said first electrode such that a reference oxygen concentration is produced in said diffusion room (4) without creating excessive rise of oxygen pressure therein for the exhaust gas whose air/fuel ratio state extends from lean to rich,

c) detecting the fact that the air/fuel ratio has become equal to the stoichiometric air/fuel ratio from a voltage ($E_o$) generated between said first and second electrodes (2, 3), and

d) controlling the oxygen concentration at said first electrode (2) in said diffusion room (4) by the constant current excitation method.

2. The method of claim 1, characterized by the steps of

e) dimensioning the sectional area of said gas diffusion hole (5) to be 1/100 or less the area of said second electrode (3).

3. The method of claim 1 or 2, characterized by the step of

f) providing a cover (70) on said solid electrolyte layer (1) to enclose one of said first and second electrodes (2, 3) to form said diffusion room (4) between said cover (70) and said solid electrolyte layer (1) and forming said gas diffusion hole (5) as a groove located between said cover (70) and said solid electrolyte layer (1).

4. The method of claim 3, characterized by the step of

g) forming said diffusion room (4) and said gas diffusion hole (5) using an organic binder.

5. The method of one of the claims 1 to 4, characterized by the step of

h) incorporating a heater into said sensor.

**Patentansprüche**

1. Verfahren zum Betreiben eines Mischungsverhältnisfühlers, der in aus einer Brennkraftmaschine austretendes Abgas eingebaut ist und aus der Abgaszusammensetzung ermittelt, daß das Mischungsverhältnis in der Maschine ein stöchiometrisches Mischungsverhältnis geworden ist, umfassend eine Trockenelektrolytschicht (1) aus Zirconium, auf deren einer Seite eine erste Elektrode (2) und auf deren anderer Seite eine zweite Elektrode (3) gebildet ist, einen Diffusionsraum (4), der angrenzend an die erste Elektrode diese umschließend gebildet und mit der Außenseite des Fühlers durch eine Gasdiffusionsöffnung (5) verbunden ist, und Anschlüsss (7, 8) zum Fließenlassen eines elektrischen Stroms (Ip) zwischen der ersten und der zweiten Elektrode, gekennzeichnet, durch folgende Schritte:

a) Fließenlassen des elektrischen Stroms (Ip) von der ersten Elektrode (2) in dem Diffusionsraum (4) als positiver Elektrode zu der zweiten Elektrode (3) auf der anderen Seite der Trockenelektrolytschicht (1) als negativer Elektrode,

b) Festlegen der Flächen der Diffusionsöffnung (5) und der ersten Elektrode derart, daß in dem Diffusionsraum (4) eine Referenz-Sauerstoffkonzentration gebildet wird, ohne daß darin ein überhöhter Sauerstoffdruckanstieg für das Abgas erzeugt wird, dessen Mischungsverhältnis-Zustand zwischen mager und fett verläuft,

c) Erfassen der Tatsache, daß das Mischungsverhältnis gleich dem stöchiometrischen Mischungsverhältnis geworden ist, aus einer zwischen der ersten und der zweiten Elektrode (2, 3) erzeugten Spannung (E₀), und

d) Regeln der Sauerstoffkonzentration an der ersten Elektrode (2) in dem Diffusionsraum (4) durch die Konstantstromerregungsmethod.

2. Verfahren nach Anspruch 1, gekennzeichnet durch den Schritt:

e) Dimensionieren der Querschnittsfläche der Gasdiffusionsöffnung (5) so, daß sie gleich 1/100 oder weniger der Fläche der zweiten Elektrode (3) ist.

3. Verfahren nach Anspruch 1 oder 2, gekennzeichnet durch den Schritt:

f) Vorsehen einer Abdeckung (70) auf der Trockenelektrolytschicht (1), so daß die erste oder die zweite Elektrode (2, 3) davon umschlossen ist under Bildung des Diffusionsraums (4) zwischen der Abdeckung (70) und der Trockenelektrolytschicht (1), und Ausbilden der Gasdiffusionsöffnung (5) als eine zwischen der Abdeckung (70) und der Trockenelektrolytschicht (1) positionierte Nut.

4. Verfahren nach Anspruch 3, gekennzeichnet durch den Schritt:

g) Ausbilden des Diffusionsraums (4) und der Gasdiffusionsöffnung (5) unter Einsatz eines organischen Bindemittels.

5. Verfahren nach einem der Ansprüche 1—4, gekennzeichnet durch den Schritt:

h) Einfügen eines Heizelements in den Fühler.

**Revendications**

1. Procédé pour faire fonctionner un capteur du rapport air/carburant placé dans les gaz d'échappement émis par un moteur à combustion interne de manière à détecter, à partir de la composition des gaz d'échappement, le fait que le rapport air/carburant dans ledit moteur est devenu un rapport air/carburant stoechiométrique, et comprenant une couche d'électrolyte solide (1) faite de zircone, sur l'une des faces de laquelle est formée une première électrode (2) et sur l'autre des faces de laquelle est formée une seconde électrode (3), une chambre de diffusion (4) adjacente à ladite première électrode de manière à l'entourer et raccordée à l'extérieur dudit capteur par l'intermédiaire d'un trou (5) de diffusion du gaz, et des moyens formant bornes (7, 8) pour faire circuler un courant électrique (Ip) entre lesdits première et secondes électrodes,

caractérisé par les étapes consistant à

a) faire circuler ledit courant électrique (Ip) depuis ladite première électrode (2) située dans ladite chambre de diffusion (4) et utilisée comme électrode positive en direction de ladite seconde électrode (3) située sur l'autre face de ladite couche d'électrolyte solide (1) et utilisée comme électrode négative,

b) déterminer les surfaces dudit trou de diffusion (5) et de ladite première électrode de manière qu'une teneur de référence en oxygène soit produite dans ladite chambre de diffusion (4) sans faire apparaître un accroissement excessif de la pression d'oxygène dans cette chambre, pour les gaz d'échappement dont la gamme des rapports air/carburant s'étend d'une valeur correspondant à un mélange pauvre à une valeur correspondant à une mélange riche,

c) détecter le fait que le rapport air/carburant est devenu égal au rapport air/carburant stoechiométrique, sur la base d'une tension (E₀) produite entre lesdites première et seconde électrodes (2, 3), et

d) commander la teneur en oxygène au niveau de ladite première électrode (2) dans ladite chambre de diffusion (4) au moyen du procédé d'excitation à courant constant.

2. Procédé selon la revendication 1, caractérisé par l'étape consistant à

e) dimensionner la surface en coupe dudit trou (5) de diffude de diffusion du gaz de manière qu'elle soit égale à 1/100 ou moins de la surface de ladite seconde électrode (3).

3. Procédé selon la revendication 1 ou 2, caractérisé par l'étape consistant à

f) disposer un couvercle (70) sur ladite couche d'électrolyte solide (1) de manière à envelopper l'une desdites première et seconde électrodes (2, 3) pour former ladite chambre de diffusion (4) entre ledit couvercle (70) et ladite couche d'électrolyte solide (1) et former ledit trou (5) de diffusion du gaz sous la forme d'une rainure située entre ledit couvercle (70) et ladite couche d'électrolyte solide (1).

4. Procédé selon la revendication 3, caractérisé par l'étape consistant à

g) former ladite chambre de diffusion (4) et ledit trou (5) de diffusion du gaz en utilisant un liant organique.

5. Procédé selon l'une quelconque des revendications 1 à 4, caractérisé par l'étape consistant à

h) incorporer un dispositif de chauffage dans ledit capteur.

# FIG.1

# FIG.2

OUTPUT VOLTAGE $E_0$

$I_{P1}$

$I_{P2}$

EXCESS AIR FACTOR $\lambda$

# FIG.3

OUTPUT VOLTAGE $E_0$

Temp1

Temp2

EXCESS AIR FACTOR $\lambda$

# FIG.4

# FIG.5

# FIG.6a

# FIG.6b

# FIG.7

# FIG.8

# FIG.9

# FIG. 10

# FIG. 11